# EUROPEAN PATENT APPLICATION

(11) **EP 2 186 868 A1**
(43) Date of publication of application: **19.05.2010**
(21) Application number: 08827709.0
(22) Date of filing: 13.08.2008
(51) Int. Cl.: C09J 7/04, B32B 27/00, C09J 175/04, C09J 201/00, D04B 21/14, A41D 27/24

(54) **ADHESIVE TAPE**

(30) Priority: 21.08.2007 JP 2007214438; 25.01.2008 JP 2008014777
(71) Applicant: Nisshinbo Holdings, Inc., Chuo-ku Tokyo 103-8650 (JP)
(72) Inventor: RENZO, Kazuhiko, Osaka-shi Osaka 541-0057 (JP)
(74) Representative: Skuhra, Udo
(86) International application number: PCT/JP2008/064530
(87) International publication number: WO 2009/025224

(57) **Abstract**

The present invention provides an adhesive tape to be used for clothes, more specifically, to be used for non-sewn clothes, which are made into clothes using the adhesive tape, reducing sewn portions of clothes to the utmost. The adhesive tape has elasticity in the warp direction while controlling crosswise stretching to the utmost. An adhesive tape is **characterized in that** it is made from an elastic film as a core layer, hot melt resin laminated on one surface thereof, and a woven-knitted fabric laminated on the other surface. The woven-knitted fabric is set while being stretched to the limit in the crosswise direction, and includes heat seal elastic yarn. Moreover, warp knitted fabric is suitable for the woven-knitted fabric, heat seal polyurethane elastic yarn is suitable for the heat seal elastic yarn, and a polyurethane film is suitable for the elastic film, and it is used for non-sewn clothes.

## Description

### Technical Field

The present invention relates to an adhesive tape used for clothes (undershirts, trunks, briefs, panties, slips, camisoles, bras, girdles, rainwear, swimsuits, cut and sew apparel etc.). More specifically, it relates to an adhesive tape, which is used for non-sewn clothes, which are made into clothes using the adhesive tape, and reduces sewn portions of clothes to the utmost.

### Background Art

Currently, 'non-sewn clothes' which has all or a part of ends of shorts, bras, or the like joined using the adhesive tape instead of sewing is becoming popular. Various bonding methods and the like have been studied until now.

For example, technology that does not hinder elasticity of elastic textile by connecting bodice to bodice through fusion of adhesive tape and covering that tape with stretchy cloth ribbon is disclosed in Patent Document 1.

In addition, technology using heat seal tape which is made of unified laminated layers of a low-melting resin sheet and a high-melting resin sheet is disclosed in Patent Document 2; technology of an adhesive sheet which includes a hot melt adhesive-coated layer on at least one surface of a base sheet with elasticity and thermal resistance is disclosed in Patent Document 3; and an adhesive tape made from a hot melt sheet and a knitted fabric having warps which are swung in the weft direction be tightly intertwined and woven is disclosed in Patent Document 4.

Patent Document 1: Registered Utility Model Publication No. 3055374
Patent Document 2: Japanese Unexamined Patent Application Publication No. 2005-226175
Patent Document 3: Japanese Unexamined Patent Application Publication No. Hei 8-120231
Patent Document 4: Japanese Unexamined Patent Application Publication No. 2007-197481

### DISCLOSURE OF INVENTION

### [Problems to be Solved by the Invention]

However, the adhesive tapes disclosed in Patent Documents 1 to 3 have elasticity, and thus also stretch according to the force of making them stretch crosswise at the junction. As a result, the junction may be removed. There are increasing requests that crosswise stretching is controlled to the utmost and there is elasticity in the warp direction when adhesive tape is applied to clothes with elasticity such as shorts or a bra. Note that warp direction means longitudinal direction of the adhesive tape, and crosswise direction means width direction of the adhesive tape. More precisely, the warp direction is along a matching line at the junction (matching part), and crosswise direction is perpendicular to the matching line. Moreover, with the adhesive tape disclosed in Patent Document 4, there are problems that laminating knitted fabric compositions are limited, a desired elasticity is difficult to acquire, and it may not be used even when use of tricot knitted fabric is desired regarding clothes to which the tape is to be applied.

The present invention aims to provide an adhesive tape to be used for clothes, more specifically, to be used for non-sewn clothes, which are made into clothes using the adhesive tape, reducing sewn portions of clothes to the utmost. The adhesive tape has elasticity in the warp direction while controlling crosswise stretching to the utmost.

### [Means of Solving the Problems]

Therefore, as a result of dedicated examination, the inventor found that a tape that has favorable elasticity in the warp direction and controls crosswise stretching to the utmost may be obtained by laminating knitted fabrics using heat seal elastic yarn, which is set while being stretched to the limit, as the tape having a hot melt layer, leading to the present invention.

The present invention relates to an adhesive tape, which is made basically from an elastic film as a core layer, laminated hot melt resin on one surface thereof, and a laminated knitted fabric on the other surface, and is structured based on the following technology.

(1) An adhesive tape is **characterized in that** it is made from an elastic film as a core layer, hot melt resin laminated on one surface thereof, and a woven-knitted fabric laminated on the other surface. The woven-knitted fabric is set while being stretched to the limit in the crosswise direction, and includes heat seal elastic yarn.

(2) The adhesive tape according to (1) is **characterized in that** the woven-knitted fabric set while being stretched to the limit in the crosswise direction is a warp knitted fabric with 24 to 40 wales per inch.

(3) The adhesive tape according to (1) or (2) is **characterized in that** it used for non-sewn clothes.

(4) The adhesive tape according to any one of (1) to (3) is **characterized in that** the heat seal elastic yarn is heat seal polyurethane elastic yarn.

(5) The adhesive tape according to any one of (1) to (4) is **characterized in that** the elastic film is a polyurethane film.

(6) The adhesive tape according to any one of (1) to (5) is **characterized in that** the hot melt resin is polyurethane hot melt resin.

### [Results of Invention]

When the adhesive tape according to the present invention is used, elasticity is improved, wearing feeling and texture are good, removal or widening (gap) of the joining portion emanating from crosswise stretching of the adhesive tape is reduced. Fraying occurred after a sheet is slit to form the tape may be prevented, there is little strain, and a desired stress is stable and easy to achieve.

### BRIEF DESCRIPTION OF DRAWINGS

FIG. 1 is a diagram showing a laminated structure of an adhesive tape according to the present invention;
FIG. 2 is a diagram showing an aspect of laminated structure of joining textile components using the adhesive tape according to the present invention;
FIG. 3 is a diagram showing textile used in a first working example and a first comparative example of the present invention;
FIG. 4 is a diagram showing textile used in a second comparative example of the present invention; and
FIG. 5 is a diagram showing textile used in a fourth comparative example of the present invention.

### BEST MODE FOR CARRYING OUT THE INVENTION

Hereafter, an adhesive tape according to the present invention is described in detail while referencing appropriate drawings.

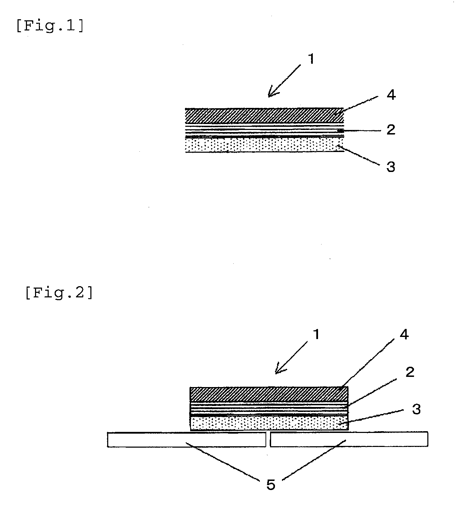

FIG. 1 shows a structure of an adhesive tape 1 according to the present invention. A hot melt layer 3 is laminated on a surface of a core layer 2, and woven-knitted fabric 4 including heat seal elastic yarn is laminated on the opposite surface thereof.

### [1] Elastic film

With the present invention, an elastic film is used as the core layer for the purpose of giving the tape elasticity.
While the elastic film used is a vinyl film, a styrene film, or the like, a polyurethane film is preferable. More specifically, use of a polyurethane film with little strain is preferred most since it has low stress, abundant flexibility, and excellent oil resistance, chemical resistance, cold resistance, and abrasion resistance.

The adhesive tape according to the present invention is used for manufacturing clothes with few sewn portions mainly by being used at ends of a bodice to join textile to textile. Since clothes stretches when putting it on/taking it off and the body has moved, if strain of the adhesive tape is great, puckering (irregularities) occurs at that joining portion. Therefore, use of a polyurethane film with little strain as the core layer is preferred particularly when used for clothes requiring expansion.

### [2] Hot melt layer

The hot melt layer of the adhesive tape may be used without particular limitation as long as it is a type typically used. For example, polyurethane hot melt resin, polyamide hot melt resin, EVA hot melt resin, polyolefin hot melt resin, styrene hot melt resin, and the like are available. Use of polyurethane hot melt resin is preferred the most.
Melting temperature of the hot melt layer is preferably between 60 and 150C degrees, more preferably between 70 and 130C degrees.

### [3] Woven-knitted fabric

While the woven-knitted fabric (textile) 4 used for the adhesive tape according to the present invention may be either a woven fabric or a knitted fabric, use of a knitted fabric is preferred since it is easy to obtain elasticity in the warp direction.
Note that since there is hardly any elasticity in the weft direction when using a woven fabric, reduction of 'openings', which is an aim of the present invention, is possible; however, it is unfavorable since there is hardly any elasticity in the warp direction and has poor elasticity when applied to clothes.

### (1) Knitted fabric (composition)

If it is a knitted fabric that can be laminated on an elastic film, it may be any one of weft knitting (plain stitch, rib stitch, purl stitch, etc.), warp knitting (dembigh stitch, cord stitch, etc.), chain stitch, raschel knitting, power net stitch, and similar stitches as long as it is a well-known weave; however, warp knitted fabric with which elasticity in the weft and warp directions is easily achieved is favorable; warp knitted fabric using inelastic yarn for plain code stitch and heat seal elastic yarn for dembigh stitch is more favorable; and warp knitted fabric using inelastic yarn and heat seal elastic yarn is most favorable since expansions and contractions in the weft direction of the knitted fabric itself may be controlled more than in the case of using them separately.

### (2) Heat seal elastic yarn

With the present invention, elastic yarn having heat sealing property (heat seal elastic yarn) is used. Use of heat seal elastic yarn improves thermosetting property remarkably. Moreover, setting while stretching it in the weft direction allows drastic reduction in stretching in the weft direction while keeping elasticity in the warp direction. As a result, when used as adhesive tape for clothes, control of crosswise stretching at the joining portion while keeping stretchiness in the warp direction is possible, and control of generation of gaps (openings) at the joining portion between textile and textile is possible. Moreover, in the case of manufacturing an adhesive tape by slitting a sheet, while conventionally there has been a problem that ends of the slit woven-knitted fabric fray and curl, use of heat seal elastic yarn allows drastic reduction in such fraying and curling.
While any kind of heat seal elastic yarn may be used as long as it has a heat sealing property, heat seal polyurethane elastic yarn is most favorable, for example, Mobilon R type manufactured by Nisshinbo Industries, Inc. may be favorably used.
Regarding fineness, use of heat seal elastic yarn of approximately 10 to 300 dtex, particularly 20 to 40 dtex is favorable.

### (3) Partner yarn

Yarn used in combination with the heat seal elastic yarn may be polyester, nylon, or the like used without any particular limitation; however, polyester is favorable in terms of heat resistance. In the case of dyeing, use of normal-pressure cationic-dyeing polyester yarn (cationic yarn) is particularly favorable. By using cationic yarn, color transfer (transitional sublimation) from knitted fabric laminated on adhesive tape to attached cloth may be prevented.
Since manufacturing the knitted fabric itself thinly in order to use it as adhesive tape is preferable, fineness of approximately 10 to 300 dtex, particularly 30 to 40 dtex is preferred for this partner yarn.

### (4) Mixing rate

Mixing rate of heat seal elastic yarn to woven-knitted fabric is preferably between 10 and 50%, more preferably between 25 and 35%. By setting this range, moderate elasticity in the warp direction of the adhesive tape may be provided, and thermosetting may be performed effectively, thereby controlling crosswise stretching.

### (5) Scouring

Scouring is performed in order to process such as dye uniformly. Conditions and the like for scouring may be according to well-known methods.

### (6) Preset

The knitted fabric shrunk through the above-mentioned scouring is preset using a setting apparatus such as a pin stenter according to need. Presetting conditions are dry heating at 130 to 210C degrees for approximately 10 to 180 seconds. Presetting the knitted fabric while it is being stretched to the limit in the crosswise direction may ultimately provide a knitted fabric capable of controlling stretching in the crosswise direction to the utmost.

### (7) Dyeing

The preset knitted fabric is dyed according to need. Conditions for dyeing may be within the well-known range.

### (8) Final set

Final setting of the dyed knitted fabric is performed while it is being stretched again according to need to the limit in the crosswise direction. Setting conditions are dry heating at 130 to 210C degrees for approximately 10 to 180 seconds.
This processing may provide a knitted fabric with stretching in the crosswise direction which is controlled to the utmost.

Note that in the case where warp knitted fabric is knitted using, for example, a 28 gauge tricot machine, the 'woven-knitted fabric while it is being stretched to the limit' adjusted such that density in the wale direction after thermosetting is 24 to 40 wales per inch is favorable, and 30 to 38 wales per inch is more favorable. While it is normally adjusted to be approximately 50 to 60 wales in the case of warp knitted fabric, when it is used as the adhesive tape according to the present invention, the fabric shall be stretched and set beyond the normal range in order to control stretching in the crosswise direction. By stretching the knitted fabric and thermosetting it to be within this range, stretching in the crosswise direction may be reduced. Knitted fabric falling outside of this range still has elasticity in the crosswise direction, and thus when used as adhesive tape for joining knitted fabric to knitted fabric, it could lead to causing an opening at that joining portion.

Some specific conditions for the above setting step are, for example, presetting by stretching gray fabric, which is shrunk to a width of 80 cm through scouring, to 240 cm (300%), and final setting by re-stretching the knitted fabric, which is shrunk to 170 cm in the subsequent dyeing step, to 240 cm.

### (9) Setting apparatus

Any kind of apparatus to be used for setting may be used as long as it is well known, such as a pin stenter.

### [4] Lamination

The adhesive tape 1 according to the present invention is made up of the hot melt layer 3 and the woven-knitted fabric 4 laminated on an elastic film or the core layer 2.
First, lamination of the elastic film 2 and the hot melt layer 3 may employ various well-known methods. For example, extrusion molding using a T die or lamination forming is possible.

Next, the woven-knitted fabric 4 is laminated on the elastic film 2. Since the hot melt layer 3 is already laminated on one surface of the elastic film 2, the woven-knitted fabric 4 is laminated on the opposite surface.
While a well-known method may be employed as the lamination method, transfer lamination method (dry lamination), dot lamination (moisture curing PUR), and similar methods may be used, for example.
Moreover, release paper may be provided on the hot melt layer 3 side.

Thickness of the adhesive tape is preferably between 100 and 600 µm, more preferably between 200 and 400 µm. The thinnest thickness possible is favorable for tape to be applied to clothes. Since the laminated knitted fabric is set in a stretched state, thickness of the knitted fabric itself is thin, and so thickness of the entire tape may be reduced.

### [5] Slit

A slit approximately 10 to 15 mm wide, for example, is made in the sheet laminated as in the above manner. A well-known slitting method may be used, and a roll cutter (CX310A) manufactured by Cortec Co., Ltd., for example, may be used.

### [6] Joining of textile components

The adhesive tape according to the present invention joins together textile components.
As shown in FIG. 2, matching parts of textile components 5 are joined by the adhesive tape according to the present invention. The joining portion, unlike in the case of sewing, may be made to look smooth in appearance without irregularities.
More specifically, adhesive tape is laid on the matching part at an end of textile components to be joined together, and heat is applied from above using a hot-air welding machine or the like.
Moreover, there is another manufacturing method of joining synthetic fabrics by ultrasonic waves, and reinforcing that joined portion by the adhesive tape.

### [Working Examples]

The present invention is described forthwith using working examples and comparative examples; however, the present invention is not limited to these working examples, and modification thereof is possible as long as it does not deviate from the scope of the present invention.

### [Working Example 1]

### 1. Constitution of elastic film

A thermoplastic esther polyurethane film (Mobilon film MF60T-MX manufactured by Nisshinbo Industries, Inc.) is used as the elastic film.

### 2. Hot melt layer

Flaky resin made of polybutylene adipate, 4,4-diphenylmethane diisocyanate, and 1,4-butanediol is used as the hot melt resin, and a hot melt layer is laminated on the elastic film of the above step 1. using an extruder to which a slit die is attached.

### 3. Constitution of woven-knitted fabric

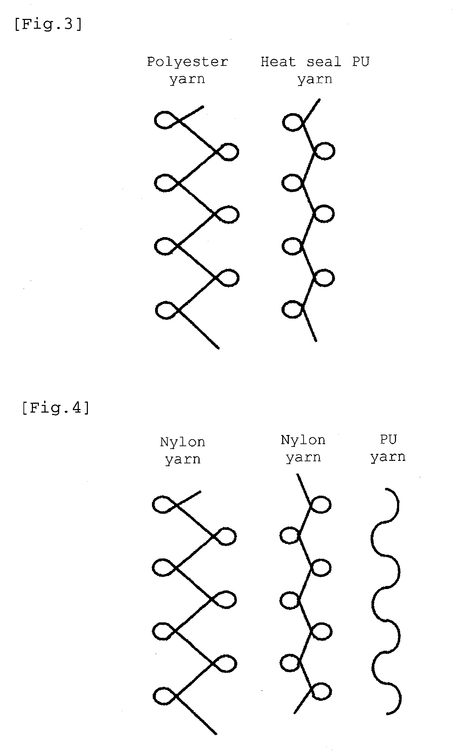

Textile (FIG. 3) constituted by a plain cord composition of normal-pressure cationic-dyeable polyester 33 dtex 36 filament yarn (product name Soluna, manufactured by Mitsubishi Rayon Textile Company, Limited), and an accompanying dembigh composition using heat seal polyurethane elastic yarn 44 dtex (product name Mobilon R manufactured by Nisshinbo Industries, Inc.) (use rate: 68% polyester yarn, 32% polyurethane elastic yarn) is manufactured using a 28-gauge tricot machine, where the textile is stretched to the maximum width and subjected to a thermosetting process (170C degrees, 60 seconds) so that the knitted fabric density is 35 wales. This knitted fabric is almost completely set in that maximum stretched state, and crosswise stretching does not occur.

### 4. Lamination of elastic film and knitted fabric, and fabrication of tape

The knitted fabric manufactured in the above step 3. is laminated through dot lamination on the surface to which the hot melt layer of the elastic film is not joined, and a 10-mm wide slit in the warp direction is formed using a roll cutter (CX310A manufactured by Cortec Co., Ltd.) so as to manufacture adhesive tape.

### [Working Example 2]

Aside from changing the dot lamination to complete lamination for lamination of the elastic film to the knitted fabric, adhesive tape is produced in the same manner as in Working Example 1.

### [Working Example 3]

Aside from changing the elastic film from being a thermoplastic esther polyurethane film to a thermoset esther polyurethane film (XN-2004 manufactured by Nippon Polyurethane Industry Co., Ltd.), adhesive tape is produced in the same manner as in Working Example 1.

### [Comparative Example 1]

Aside from making the knitted fabric density in the case of stretching the knitted fabric at the time of thermosetting be 55 wales, and not setting it while it is being stretched to the limit, adhesive tape is produced in the same manner as in Working Example 1.

### [Comparative Example 2]

Aside from using textile (FIG. 4) as the woven-knitted fabric constituted by a plain cord composition of nylon 22 decitex 7 filament yarn, a dembigh composition, and an insertion composition of polyurethane elastic yarn 156 decitex using a raschel knitting machine, adhesive tape is produced in the same manner as in Working Example 1.

### [Comparative Example 3]

Aside from using a typical polyurethane elastic yarn instead of the heat seal polyurethane elastic yarn, adhesive tape is produced in the same manner as in Working Example 1.

### [Comparative Example 4]

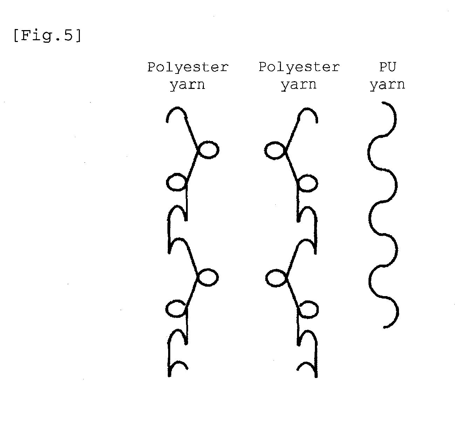

Aside from using power net knitted fabric (FIG. 5) as the woven-knitted fabric constituted by a tulle composition of polyester 56 decitex 24 filament yarn, and an insertion composition of polyurethane elastic yarn 156 decitex using a raschel knitting machine, adhesive tape is produced in the same manner as in Working Example 1.

The following items have been evaluated for the working examples and the comparative examples.

### (1) Curling

Once 300 mm of the produced adhesive tape is cut out and left under normal temperatures for 10 minutes, generation of curling is checked visually.
O: Tape has no curling
X: Tape has curling

### (2) Fraying

The tape side portion of the produced adhesive tape is visually observed, and fraying thereof is checked.
O: Tape side portion has no fraying
Δ: Tape side portion has a little fraying
X: Tape side portion has fraying

### (3) Aesthetic property

Two pieces of knitted fabric are joined together by the produced adhesive tape.
The knitted fabric is made of tricot fabric (10 cm by 10 cm).
These two pieces of textile are arranged so that ends thereof meet perfectly, the adhesive tape is positioned on the portion where those ends meet, and the adhesive tape is pressed from above using a hot press (QHP-H20R manufactured by Queen Light Electronic Industries Ltd.) set at 140C degrees to fuse the hot melt layer, thereby joining together the two pieces of knitted fabric.
The knitted fabric is observed from the back side of that joining portion, and aesthetic property is checked.
O: No 'striking' of hot-melt article
X: There is 'striking' of hot-melt article
Note that 'striking' refers to a state in which sensation of the applied laminated tape appears at the surface textile.

### (4) Tensile stress, tensile strain

The produced adhesive tape is stretched in the warp direction at a tension rate of 300 mm/min using a tensile tester (TENSILON/UTM-III-100 manufactured by Toyo Baldwin Company Ltd.), and stress at times of stretching the tape 10% and 50% is measured. Moreover, once it is stretched 50%, strain (%) when stress is returned to zero is measured.

### (5) Breaking elongation

The produced adhesive tape is stretched in the warp direction at a tension rate of 300 mm/min using a tensile tester (TENSILON/UTM-III-100 manufactured by Toyo Baldwin Company Ltd.), and elongation when the adhesive tape has broken is measured.

### (6) Strength at time of formation of opening

The adhesive tape is attached to a matching part of two pieces of three-layered waterproof cloth manufactured by Komatsu Seiren Co., Ltd. using a sealing machine (hot air system seam sealing machine QHP-805 manufactured by Queen Light Electronic Industries Ltd.) under conditions of heater temperature 455C degrees, roll temperature 110C degrees, air pressure 0.7 kgf/cm², and roller pressure 2.0 kgf/cm², the attached specimen is stretched in a direction perpendicular to the matching part at an tension rate of 50 mm/min, and strength when an opening is formed in the matching part is measured.

Evaluation results for Working Examples 1 to 3 and Comparative Examples 1 to 4 are given in Table 1.

**[Table 1]**

| Item | Unit | Working Example 1 | Working Example 2 | Working Example 3 | Comparative Example 1 | Comparative Example 2 | Comparative Example 3 | Comparative Example 4 |
|---|---|---|---|---|---|---|---|---|
| Curling | - | ○ | ○ | ○ | ○ | × | × | ○ |
| Fraying | - | ○ | ○ | ○ | ○ | × | × | ○ |
| Aesthetic property | - | ○ | ○ | ○ | ○ | ○ | ○ | ○ |
| 10% ten sile stress | kgf/10 mm | 0,2 | 0,2 | 0,2 | 0,2 | 0,2 | 0,1 | 0,1 |
| 50% tensile stress | | 0,5 | 0,7 | 0,9 | 0,5 | 0,5 | 0,4 | 0,4 |
| 50% ten sile strain | % | 3 | 6 | 6 | 3 | 3 | 3 | 6 |
| Breaking elongati on | % | 250 | 250 | 250 | 250 | 400 | 350 | 450 |
| Strength at time of opening formation | kgf/10 mm | 4 | 8 | 4 | 2 | 4 | 2 | 2 |

As can be understood from the evaluation test results of Table 1, the adhesive tapes of the Working Examples 1 to 3 show good results for curling, fraying, and aesthetic property, have sufficient tensile stress and breaking elongation particularly in the warp direction, and do not easily form an opening unless great force is applied.
Meanwhile, Comparative Example 1 exhibits a little strength at the time of formation of an opening, and that an opening forms easily since the knitted fabric is not set while it is being stretched to the limit. Moreover, while Comparative Example 2 shows that crosswise stretching is controlled since polyurethane elastic yarn is used as an inserting yarn, curling and fraying occur at the slit tape end. Furthermore, Comparative Example 3 exhibits fraying, poor setting rate thereof, and formation of an opening even by a relatively small force since normal yarn is used instead of heat seal yarn. Comparative Example 4 shows that fraying does not occur easily since power net knitted fabric is used; however, tolerance against openings is poor.

### [Industrial Applicability]

The adhesive tape according to the present invention has elasticity in the warp direction while controlling crosswise stretching to the utmost, is suitable as adhesive tape to be used for clothes, more specifically adhesive tape to be used for non-sewn clothes, which are made into clothes using the adhesive tape, reducing sewn portions of clothes to the utmost, and is thus extremely useful, practically.

### [Description of Reference Numerals]

1: adhesive tape according to the present invention
2: core layer (elastic film)
3: hot melt layer
4: woven-knitted fabric including heat seal elastic yarn
5: textile component

## Claims

1. An adhesive tape, which is made from an elastic film as a core layer, hot melt resin laminated on one surface thereof, and a woven-knitted fabric laminated on the other surface, wherein
the woven-knitted fabric is set while being stretched to the limit in the crosswise direction, and includes heat seal elastic yarn.

2. The adhesive tape of Claim 1, wherein the woven-knitted fabric set while being stretched to the limit in the crosswise direction is a warp knitted fabric with 24 to 40 wales per inch.

3. The adhesive tape of Claim 1 or 2 is used for non-sewn clothes.

4. The adhesive tape of any one of Claim 1 to 3, wherein the heat seal elastic yarn is heat seal polyurethane elastic yarn.

5. The adhesive tape of any one of Claim 1 to 4, wherein the elastic film is a polyurethane film.

6. The adhesive tape of any one of Claim 1 to 5, wherein the hot melt resin is polyurethane hot melt resin.
